**Europäisches Patentamt**

**European Patent Office**

**Office européen des brevets**

(19)

(11) Numéro de publication: **0 248 696**
**B1**

(12) **FASCICULE DE BREVET EUROPEEN**

(45) Date de publication du fascicule du brevet: **23.01.91**

(51) Int. Cl.⁵: **H 02 G 3/04**

(21) Numéro de dépôt: **87401084.6**

(22) Date de dépôt: **14.05.87**

(54) **Structure de corps de colonne centrale de distribution électrique.**

(30) Priorité: **03.06.86 FR 8607939**

(43) Date de publication de la demande:
**09.12.87 Bulletin 87/50**

(45) Mention de la délivrance du brevet:
**23.01.91 Bulletin 91/04**

(84) Etats contractants désignés:
**BE DE GB IT NL SE**

(56) Documents cités:
**FR-A-2 574 839**
**US-A-3 889 044**
**US-A-4 373 111**

(73) Titulaire: **TELEMECANIQUE**
**43-45, Boulevard Franklin Roosevelt**
**F-92504 Rueil-Malmaison Cedex (FR)**

(72) Inventeur: **Florimont, Claude**
**7, rue du Crucifix**
**F-21800 Crimolois (FR)**
Inventeur: **Ollivet-Besson, Gérard**
**Quartier Combe-Longue LA SONE**
**F-38160 St.Marcellin (FR)**

(74) Mandataire: **Marquer, Francis et al**
**Cabinet Moutard 35, Avenue Victor Hugo**
**F-78960 Voisins le Bretonneux (FR)**

Courier Press, Leamington Spa, England.

EP 0 248 696 B1

**Description**

La présente invention se rapporte aux colonnes pour la distribution d'énergie électrique et d'autres services similaires, tels que le téléphone, le télex, le raccordement à des terminaux divers, etc. . . ., en particulier dans des locaux à usage tertiaire (bureaux, magasin, halls de banques et autres). Elle concerne plus particulièrement une structure du corps en forme de boîte d'une telle colonne en version dite "centrale", c'est-à-dire placée au milieu du local et fixée entre le plancher et le plafond.

De façon classique, le corps d'une colonne centrale de distribution électrique par canalisations se compose d'une âme verticale conçue pour porter, soit unilatéralement sur sa face dite avant, par exemple de la façon décrite dans les brevets US—A—3 889 044 et FR—A—2 574 839, soit bilatéralement sur ses deux faces opposée dites avant et arrière, des couvercles amovibles adaptés pour recevoir par encastrement des organes de raccordement aux canalisations électriques. Le dispositif décrit par FR—A—2 574 839 comprend un couvercle en form de U pourvon de moyens d'encliquetage.

Suivant une conception connue par le brevet US—A—4 373 111 d'un corps de colonne centrale à accessibilité bilatérale, avant et arrière, l'âme verticale est constituée par un profilé en H qui est fermé de part et d'autre suivant sa hauteur par deux couvercles plats encliquetables, de manière à former une boîte de section rectangulaire à deux compartements intérieurs séparés aménagés côte à côte. L'un de ces compartiments es destiné au passage des canalisations électriques dites à courants forts, tandis que l'autre compartiments est destiné au passage des canalisations électriques dites à courants faibles (téléphone, alarme, informatique, etc. . . .), ce dernier pouvant lui-même être divisé en plusieurs logements grâce à des cloisons verticales de séparation venant se fixer à l'aide de pièce additionnelles d'assemblage sur des ailes formées sur l'un des côtés de la branche médiane du profilé en H.

Toutefois, une telle structure de corps de colonne centrale présente des inconvénients. En effet, la forme en H de l'âme définit toujours deux compartiments identiques de même volume total, de sorts qu'à partir d'une telle même âme de dimensions données, on ne peut modifier la profondeur de l'un et/ou de l'autre des compartiments en fonction des besoins, en vue de donner à la colonne un encombrement minimal approprié tant en face avant qu'en face arrière. D'autre part, chacun des deux compartiments, n'est pas conçu pour recevoir à la fois des canalisations électriques à courants forts et des canalisations électriques à courants faibles, ce qui limite la composition de la colonne en types d'accessoires de raccordement sur ses faces avant et arrière. De plus, la fixation des cloisons sur les ailes de l'âme en H s'effectue au moyen de pièces additionnelles, ce qui complique et rend plus coûteux le système de fixation.

La présente invention a en particulier pour but de remédier à ces inconvénients et de réaliser un corps de colonne centrale à accessibilité bilatérale qui soit d'une grande souplesse d'emploi en ce sens qu'à partir d'une même âme particulière de dimensions données, la colonne est composable à souhait en diverses profondeurs adaptées de couvercle sur ses faces avant et arrière.

Elle vise également à permettre un passage des canalisations électriques tant à courants forts qu'à courants faibles à l'intérieur de la colonne aussi bien en face avant qu'en face arrière de celle-ci, et à réaliser un système simple de fixation des cloisons de séparation des différents types de canalisations électriques sur l'âme du corps de la colonne.

Elle propose donc à cet effet une structure de corps en forme de boîte d'une colonne centrale de distribution électrique comportant une âme centrale verticale constituée par un profilé à section droite en forme approximative de I et deux couvercles présentant chacun une section droite en forme de U dont les branches latérales sont pourvues de premiers moyens d'encliquetage destinés à s'assembler, par encliquetage, avec des seconds moyens d'encliquetage prévus sur les deux portions d'ailes latérales (29, 30) situées d'un même côté de la partie centrale (35) du profilé en I, de manière à former avec lesdits couvercles en U en position assemblée une boîte à deux compartiments fermés s'étendant côte à côte, de part et d'autre de l'âme centrale de ce profilé, tout le long de celle-ci, chacun des susdits compartiments pouvant être divisé au moyen d'une cloison de section en forme de Y dont les deux extrémités supérieures sont conformées de manière à pouvoir s'encliqueter sur deux nervures d'accrochage qui sont formées sur la partie centrale du profilé en I et qui s'étendent sur toute la hauteur dudit profilé, cette cloison étant située au voisinage de l'une des branches latérales du couvercle correspondant en U pour délimiter ensemble un logement dans lequel peuvent passer les canalisations électriques dites à courants faibles.

Selon une autre caractéristique de l'invention, il est prévu à l'intérieur de chacun des deux compartiments délimités par les deux couvercles encliquetés de part et d'autre du profilé en I, une cloison supplémentaire de section en forme de U dont les bords extrêmes sont encliquetés sur deux nervures d'accrochage formées sur la partie centrale du profilé en I et qui est destinée à ménager, dans ce compartiment, un logement servant au passage de canalisation électriques dites à courants forts, lesdits nervures étant disposées symétriquement par rapport à un plan médian perpendiculaire au plan du profilé et s'étendant sur toute la hauteur du profilé.

D'autres caractéristique et avantages de l'invention apparaîtront mieux dans la description détaillée qui suit et se réfère aux dessins annexés données uniquement à titre d'exemple et dans lesquels:

La figure 1 représente en perspective une colonne centrale de distribution électrique; et

Les figures 2 à 4 représentent en section droite le corps de colonne conforme à l'invention, respectivement pour trois extensions bilatérales possibles des couvercles.

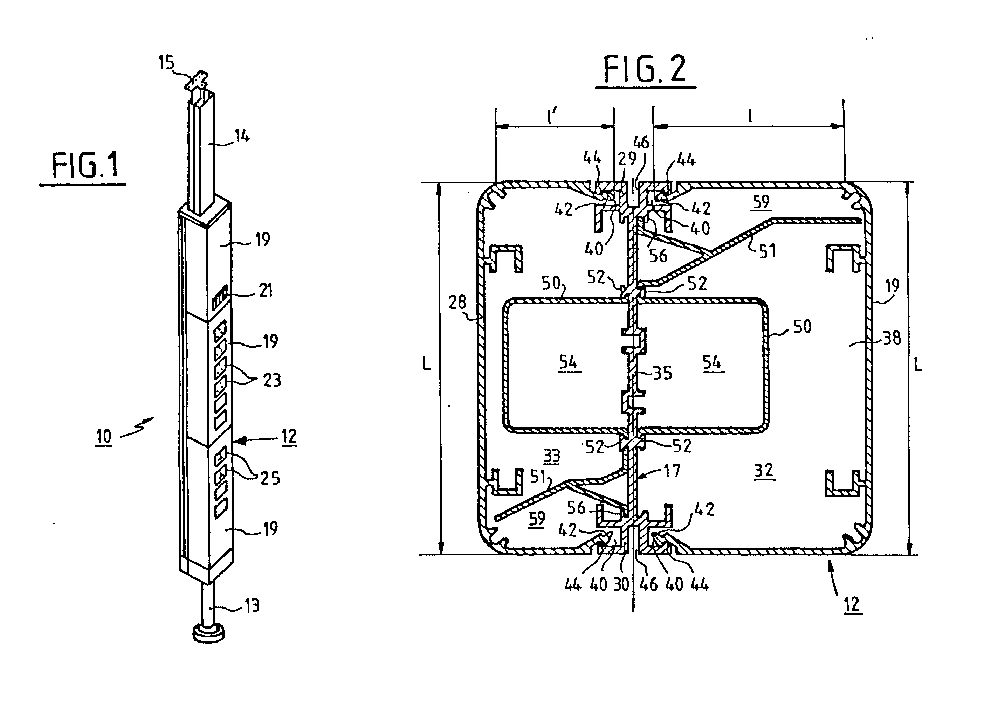

En référence à la figure 1, une colonne centrale 10 pour la distribution par canalisation de l'énergie électrique et d'autres services similaires (téléphone, télex, etc....) dans un local à usage tertiaire, se compose d'un montant vertical 12 de hauteur donnée constituant le corps de la colonne, d'un pied 13 fixé au sol par tout moyen approprié, et d'un tube télescopique 14 réalisé en aluminium anodisé et fixé au plafond du local à l'aide d'un dispositif quelconque de fixation, tel qui par exemple une équerre illustrée en 15 à la figure 1.

Le corps 12 de la colonne centrale 10 se présente sous forme d'une boîte de section droite par exemple rectangulaire à l'intérieur de laquelle passent les diverses canalisations électriques (non figurées), et comporte une âme centrale verticale réalisée en aluminium anodisé, visible en 17 sur les figures 2 à 4, et une pluralité de couvercles ou capots amovibles agencés verticalement sur toute la hauteur de l'âme et disposés bilatéralement par rapport à celle-ci sur deux faces opposées dites face avant et face arrière; sur la figure 1, seuls sont visibles les couvercles installés en face avant de la colonne.

Les couvercles appliqués tant en face avant qu'en face arrière de la colonne sont réalisés en aluminium anodisé et sont formés en tronçons de longueur standard mis bout à bout dont chacun est adapté pour recevoir par encastrement un ou plusieurs organes particuliers de raccordement aux canalisations électriques, soit à courants forts, soit à courants faibles. On indiquera que dans un but d'esthétique, les couvercles montés sur une même face de la colonne ont tous, en section droite, des dimensions identiques; par contre, les couvercles peuvent présenter en section droite des dimensions identiques ou différentes d'une face à l'autre de la colonne, comme on le verra plus loin.

A titre illustratif et non limitatif, on a représenté sur la figure 1 trois couvercles 19 accessibles en face avant de la colonne et conçus pour remplir des fonctions d'utilisation différentes adaptées aux besoins: par exemple, le couvercle supérieur est percé d'un orifice 21 permettant de recevoir un disjoncteur modulaire de protection, le couvercle central est équipé d'accessoires de raccordement 23 destinés à la distribution d'énergie et constitués par des socles de prises de courant, des interrupteurs, etc...., et le couvercle inférieur est pourvu d'accessoires de raccordement 25 destinés à la distribution d'autres services et constitués par des conjoncteurs téléphoniques, des connecteurs pour la transmission informatique, etc....

Dans un mode d'exécution préféré de l'invention, comme le montrent les figures 2 à 4, l'âme 17 du corps 12 de la colonne centrale à accessibilité bilatérale, avant et arrière, est un profilé à section droite en forme approximative de I qui est fermé de part et d'autre par des couvercles en U (19; 28) encliquetés sur les deux ailes latérales respectives 29 et 30 du profilé en I, de manière à former une boîte de section droite rectangulaire à deux compartiments ou conduits intérieurs (32; 33) aménagés côte à côte et séparés l'un de l'autre par la partie centrale 35 du profilé en I.

Le fait de donner à l'âme 17 du corps de la colonne une forme de I permet du lui appliquer de part et d'autre se sa partie centrale des couvercles en U qui présentent des sections respectives identiques ou différentes: à partir d'une même âme verticale en I de dimensions données (hauteur, largeur) et seulement de deux types (ou plus) de couvercle en U ayant le même largeur que l'âme et des profondeurs respectives différentes, il est donc possible de composer à souhait la colonne en une ou deux profondeurs de couvercle sur ses faces d'accès avant et arrière, suivant les besoins recherchés. En outre, à partir de tronçons de couvercle remplissant chacun une fonction particulière, il est également aisé de transformer la composition de la colonne afin de suivre l'évolution de l'installation.

Ainsi, on a représenté à la figure 2 deux couvercles 19 et 28 de sections différentes (respectivement L×1 et L×1' avec l'inférieur à 1) en position encliquetée de manière à définir avec l'âme 17 deux compartiments séparés 32 et 33 de profondeurs différentes: le grand compartiment de droite 32 présente une profondeur adéquate permettant de loger un disjoncteur modulaire de protection (non figuré) dans la zone désignée par la référence 38; le petit compartiment de gauche 33 présente une profondeur inférieure pour le cas où l'on ne désire pas y installer de disjoncteur ou tout autre appareil présentant une partie encastrée profonde.

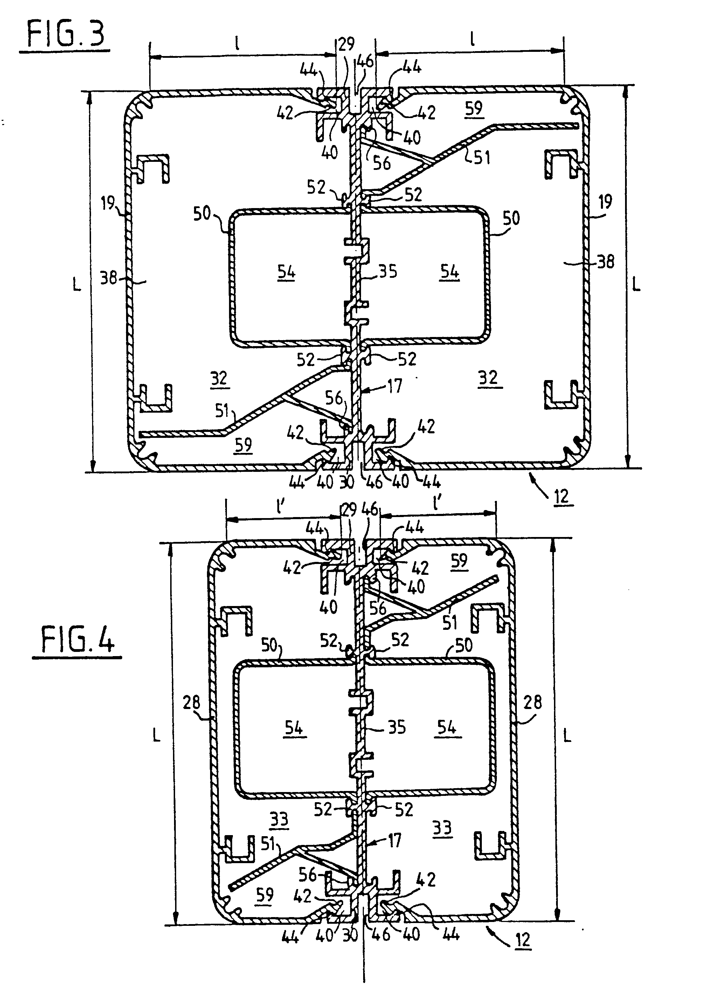

Selon une autre composition bilatérale illustrée à la figure 3, les faces avant et arrière de la colonne sont constituées l'une et l'autre de couvercles encliquetés 19 de même section (L×1) qui délimitent avec l'âme 17 deux grands compartiments 32 de même profondeur adaptée pour recevoir l'un et l'autre un disjoncteur modulaire de protection dans leurs zones respectives 38.

Dans le cas de la composition particulière illustrée à la figure 4, les deux couvercles 28 en position encliquetée présentent la même section (L×1') pour délimiter avec l'âme 17 deux petits compartiments identiques 33 en l'absence de tout disjoncteur tant en face avant qu'en face arrière de la colonne.

Comme il apparaît sur les figures 2 à 4, chaque aile latérale 29, 30 de l'âme centrale 17 en I est creusée de deux rainures 40 en U ménagées symétriquement par rapport au plan de l'âme et développées verticalement sur toute la hauteur de l'âme pour accueillir par encliquetage, d'un même côté de la partie centrale 35 de l'âme, les couvercles en U. A cet effet, figures 2 à 4, les deux extrémités libres de chaque couvercle en U (19; 28) se terminent respectivement par deux becs identiques d'encliquetage 42 tournés l'un vers l'autre et formés sur toute la hauteur du couvercle, chaque bec 42 venant s'accrocher derrière un rebord intérieur 44 prévu le long de la rainure correspondante 40. Pour passer de la position d'encliquetage à la position de démontage, une simple pression exercée sur les deux parois latérales de chaque couvercle en U suffit pour le désaccoupler de l'âme 17.

L'âme 17 en I du corps de la colonne comporte également deux rainures latérales en forme de U ouvert vers l'extérieur, visibles en 46 sur les figures 2 à 4, ménagées chacune dans une aile latérale (29; 30) suivant l'axe de la partie centrale 35 et développées chacune verticalement sur toute la hauteur de l'âme pour permettre la fixation, à tous niveaux de l'âme, d'accessoires annexes tels que consoles, équerres, etc. . . . pour étagères, bibliothèques et autres.

Comme le montrent les figures 2 à 4, chacune compartiment (32; 33) loge deux cloisons métalliques 50 et 51 fixées chacune par simple encliquetage sur la partie centrale 35 de l'âme 17 en I de manière à séparer les canalisations électriques à courants forts de celles à courants faibles passant dans le même compartiment. La cloison 50 s'étend verticalement et présente en section droite une forme de U dont les deux extrémités libres sont pliées sensiblement à angle droit en sens inverse l'une de l'autre et sont encliquetées respectivement sur deux nervures 52 formées sur la partie centrale 35 de l'âme, symétriquement par rapport à un plan médian perpendiculaire au plan de l'âme; les nervures 52 s'étendent sur toute la hauteur de l'âme, laquelle délimite avec la cloison associée 50 en position encliquetée un logement central 54 ayant des dimensions adaptées pour recevoir les canalisation électriques à courants forts (non figurées).

L'autre cloison 51 de chaque compartiment, figures 2 à 4, est placée latéralement par rapport à l'une ou l'autre des branches latérales de la cloison 50 en U en position encliquetée; la cloison 51 s'étend verticalement et présente en section droite une forme approximative de Y dont les deux extrémités libres de sa partie formant tête sont pliées sensiblement d'équerre en sens inverse l'une de l'autre et sont encliquetées l'une sur la nervure correspondante 52 pourvue de deux zones d'accrochage opposées, et l'autre sur une nervure 56 formée à l'extrémité correspondante de la partie centrale 35 de l'âme.

A l'intérieur de chaque compartiment, la cloison 51 en position encliquetée délimite avec la paroi latérale correspondante de chaque couvercle assemblé à l'âme 17 un logement latérale 59 de dimensions adaptée pour recevoir toutes les canalisations électriques à courants faibles (non figurées), telles que les câbles pour téléphone, alarme, informatique, etc. . . .

**Revendications**

1. Structure de corps en forme de boîte d'une colonne centrale de distribution électrique comportant une âme centrale verticale (17) constituée par un profilé à section droite en forme approximative de I et deux couvercles présentant chacun une section droite en forme de U dont les branches latérales sont pourvues de premiers moyens d'encliquetage (42, 44) destinés à s'assembler, par encliquetage, avec des seconds moyens d'encliquetage prévus sur les deux portions d'ailes latérales (29, 30) situées d'un même côté de la partie centrale (35) du profilé en I, de manière à former avec lesdits couvercles en U en position assemblée une boîte à deux compartiments fermés (32, 33) s'étendant côte à côte, de part et d'autre de l'âme centrale (17) de ce profilé, tout le long de celle-ci, chacun des susdits compartiments pouvant être divisé au moyen d'une cloison (51) de section en forme de Y dont les deux extrémités supérieures sont conformées de manière à pouvoir s'encliqueter sur deux nervures d'accrochage (52, 56) qui sont formées sur la partie centrale du profilé en I et qui s'étendent sur toute la hauteur dudit profilé, cette cloison étant située au voisinage de l'une des branches latérales du couvercle correspondant en U pour délimiter ensemble un logement (59) dans lequel peuvent passer les canalisations électriques dites à courants faibles.

2. Structure selon la revendication 1, caractérisée en ce que les branches latérales de l'un (19) des couvercles en U ont en section droite des longueurs différentes de celles des branches latérales de l'autre couvercle en U (28).

3. Structure selon l'une des revendications 1 ou 2, caractérisée en ce que les rebords des deux ailes latérales du profilé en I sont chacun creusés d'une rainure (40) qui est développée verticalement sur toute la hauteur du profilé et qui est en forme de U pour accueillir l'extrémité d'une branche latérale de l'un des couvercles, et en ce que les moyens d'engagement réciproque sont constitués par un bec (42) réalisé à l'extrémité de chaque branche latérale des couvercles en U, formé d'une seule pièce avec le couvercle, sur toute la hauteur de celui-ci, et encliqueté derrière un rebord (44) prévu sur la rainure correspondante en U et formé sur toute la hauteur du profilé.

4. Structure selon l'une des revendications 1 à 3, caractérisée en ce qu'il est prévu, à l'intérieur de chacun des deux compartiments (32, 33) délimités par les deux couvercles (19, 28) encliquetés de part et d'autre du profilé en I, une cloison supplémentaire (50) de section en forme de U dont les bords extrêmes sont encliquetés sur deux nervures d'accrochage (52) formées sur la partie centrale (35) du profilé en I et qui est destinée à ménager, dans ce compartiment (32, 33), un logement (54) servant au passage de canalisation électrique dites à courants forts, lesdites nervures étant disposées symétriquement par rapport à un plan médian perpendiculaire au plan de profilé et s'étendant sur toute la hauteur du profilé.

5. Structure selon l'une des revendications précédentes, caractérisé en ce que chacun des deux couvercles en U (19, 28) en position assemblée se compose de tronçons adjacents de longueur standard.

## Patentansprüche

1. Kastenartige Anordnung einer zentralen elektrischen Verteilersäule, mit einem zentralen Kern (17), gebildet von einer Profilschiene mit annähernd I-förmigem Querschnitt und zwei Hauben, mit jeweils U-förmigem Querschnitt, deren seitliche Schenkel mit ersten Einrastmitteln (42, 44) versehen sind und durch Einrasten mit zweiten Einrastmitteln verbunden werden können, welche auf den beiden auf derselben Seite im Verhältnis zum Mittelteil (35) angeordneten Seitenflanschteilen (29, 30) der I-förmigen Profilschiene vorgesehen sind um, zusammenmontiert, mit den U-förmigen Hauben einen Kasten mit zwei geschlossenen Kammern (32, 33) zu bilden, die sich Seite an Seite beidseitig des mittleren Kerns (17) dieser Profilschiene über deren gesamte Länge hin erstrecken, wobei jede der besagten Kammern unterteilt werden kann, mittels eine Zwischenwand (51) mit Y-förmigem Querschnitt, deren beide obere Enden so ausgelegt sind, dass sie auf zwei, auf dem Mittelteil der I-förmigen Profilschiene gebildeten Einfangrippen (52, 56) einrasten, welche sich über die gesamte Länge der besagten Profilschiene erstrecken und besagte Zwischenwand in der Nähe eines der Seitenschenkel der entsprechenden U-förmigen Haube angeordnet ist, um mit diesem eine Behausung (59) zu bilden, durch welche die sogenannten elektrischen Schwachstromleitungen geführt werden können.

2. Anordnung nach Anspruch 1, dadurch gekennzeichnet, dass die Seitenschenkel einer (19) der U-förmigen Hauben im Querschnitt nicht die gleiche Länge haben wie die Seitenschenkel der anderen U-förmigen Haube (28).

3. Anordnung nach einem der Ansprüche 1 oder 2, dadurch gekennzeichnet, dass in den Rändern der beiden Seitenflansche der I-förmigen Profilschiene jeweils eine Rinne (40) eingebracht ist, die sich senkrecht über die gesamte Höhe der Profilschiene erstreckt und U-förmig ausgebildet ist, um das Ende eines Seitenschenkels einer der Hauben aufzunehmen und dass die ineinandergreifenden Mittel durch eine am Ende jedes Schenkels der U-förmigen Haube angeordnete Nase (42) gebildet werden, welche aus einem Stück mit der Haube geformt ist, sich über deren gesamte Länge erstreckt und hinter einem Rand (44) der entsprechenden U-förmigen Rinne einrastet, welcher sich über die gesamte Länge der Profilschiene erstreckt.

4. Anordnung nach einem der Ansprüche 1 bis 3, dadurch gekennzeichnet, dass im Inneren jeder der beiden Kammern (32, 33), welche von den beiden zu beiden Seiten der I-förmigen Profilschiene durch Einrasten befestigen Hauben (19, 28) gebildet werden, eine weitere Trennwand (50) mit U-förmigem Querschnitt vorgesehen ist, deren Endränder auf zwei, auf dem Mittelteil (35) der I-förmigen Profilschiene gebildeten Einfangrippen (52) einrasten und die dazu dient, in besagten Kammern (32, 33) eine Behausung (54) zu formen, durch welche die sogenannten elektrischen Starkstromleitungen geführt werden können, wobei besagte Rippen symmetrisch zu einer Mittelebene angeordnet sind, welche senkrecht zur Ebene der Profilschiene verläuft und sich über die gesamte Höhe der Profilschiene erstrecken.

5. Anordnung nach einem der vorhergehenden Ansprüche, dadurch gekennzeichnet, dass jede der beiden zusammengebauten U-förmigen Hauben (19, 28) aus benachbarten Abschnitten von Stardardlänge besteht.

## Claims

1. A box-shaped central column structure for electrical distribution, comprising a central vertical web (17) formed by a profile with approximately I-shaped cross-section and two covers, each having a U-shaped cross-section, the lateral legs of which are provided with first snap-fit means (42, 44) for engaging with second snap-fit means provided on the two lateral wing portions (29, 30) located at one and the same side of the central portion (35) of the I-shaped profile, so as to form, with said U-shaped covers in the assembled position a box with two closed compartments (32, 33) extending side by side on either side of the central web (17) of said profile along the whole length thereof, each of said compartments being separable by means of a partition wall (51) of Y-section the two upper ends of which are shaped so as to be fixed by snap-fitting on two catching ribs (52, 56) formed on the central portion of the I-shaped profile, said dividing wall being located near one of the lateral legs of the corresponding U-shaped cover for defining therewith a housing (59) through which may pass electrical feed-lines called low-voltage lines.

2. The structure as claimed in claim 1, characterized in that the length in cross-section of the lateral legs of one (19) of the U-shaped covers is different from that of the lateral legs of the other U-shaped cover (28).

3. The structure as claimed in one of claims 1 or 2, characterized in that the edges of the two lateral flanges of the I-shaped profile are each provided with a groove (40) vertically extending over the whole height of the profile and being U-shaped for receiving the end of a lateral leg of one of the covers, and in that the reciprocal engagement means are formed by a nose (42) formed at the end of each lateral leg of the U-shaped covers, integrally formed with said cover over the whole height thereof and snap-fitted behind an edge (44) on the corresponding U-shaped groove extending over the whole height of the profile.

4. The structure according to one of claims 1 to 3, characterized in that a further dividing wall (50) having a U-shaped cross-section is provided in each of the two compartments (32, 33) defined by said two covers (19, 28), said covers being fixed by snap-fitting on either side of the I-shaped profile, the terminal edges of said dividing wall being snap-fitted on two catching ribs (52) formed on the central part (35) of the I-shaped profile, said wall providing, inside said compartment (32, 33), a housing (54) through which may pass electrical feed-lines called high-voltage lines, said ribs being located symmetrically with respect to a median plane perpendicular to the plane of the profile and extending over the whole height thereof.

5. The structure according to one of the preceding claims, characterized in that, in the assembled position, each of the two U-shaped covers (19, 28) is formed of adjacent sections of standard length.

FIG.1

FIG.2

EP 0 248 696 B1

EP 0 248 696 B1

FIG.3

FIG.4